# EUROPEAN PATENT APPLICATION

(11) **EP 4 556 378 A1**
(43) Date of publication of application: **21.05.2025**
(21) Application number: 24199461.5
(22) Date of filing: 10.09.2024
(51) Int. Cl.: B64F 5/40, B64F 5/60, G06Q 10/20

(54) **SYSTEMS AND METHODS FOR AUTOMATED DAMAGE ASSESSMENT**

(30) Priority: 17.11.2023 US 202318512333
(71) Applicant: The Boeing Company, Arlington, VA 22202 (US)
(72) Inventor: GLINIAK, Doug, Arlington, 22202 (US); LECLAIR, David J., Arlington, 22202 (US); CATLEY, Tony, Arlington, 22202 (US)
(74) Representative: St Clair Jones, Gregory Arthur Langley

(57) **Abstract**

A method for automated damage assessment includes receiving input data identifying an aircraft, a location on the aircraft, and damage information associated with the location. The method also includes automatically identifying a plurality of maintenance conditions based on the input data and a three-dimensional model of the aircraft. The three-dimensional model includes a first layer associated with a first set of structural features of a portion of the aircraft and a second layer associated with a second set of structural features of the portion of the aircraft, where the first set of structural features is distinct from the second set of structural features. The method also includes obtaining a damage limit from a digital service manual, where the damage limit is based at least on the plurality of maintenance conditions. The method also includes generating a maintenance disposition based at least on the damage limit and the input data.

## Description

### FIELD OF THE DISCLOSURE

The subject disclosure is generally related to systems and methods for automated damage assessment.

### BACKGROUND

With ever increasing air traffic, safe, efficient aircraft management becomes increasingly important. One aspect of aircraft management includes the ability of aircraft maintenance personnel to efficiently identify aircraft damage and, if possible, efficiently repair that damage. Aircraft maintenance personnel employ a service manual to aid in identifying aircraft damage and the allowable damage limits ("ADL") and repairable damage limits ("RDL") for a particular damage type, aircraft type, and damage location.

As modem aircraft become more complex, the accompanying service manual becomes increasingly impractical to quickly use for aircraft damage assessment. Additionally, as more modem materials (e.g., composites) are used in aircraft manufacturing, damage assessment and repair for areas associated with those materials become more complex. Identifying all of the myriad conditions underlying aircraft maintenance personnel's decisions on damage assessment can be a time-consuming and resource inefficient process.

### SUMMARY

In a particular implementation, a method includes receiving input data identifying an aircraft, a location on the aircraft, and damage information associated with the location. The method also includes automatically identifying a plurality of maintenance conditions based on the input data and a three-dimensional model of the aircraft, the three-dimensional model comprising a first layer associated with a first set of structural features of a portion of the aircraft and a second layer associated with a second set of structural features of the portion of the aircraft, the first set of structural features distinct from the second set of structural features. The method also includes obtaining a damage limit from a digital service manual, the damage limit based at least on the plurality of maintenance conditions. The method also includes generating a maintenance disposition based at least on the damage limit and the input data.

In another particular implementation, a device includes one or more processors configured to receive input data identifying an aircraft, a location on the aircraft, and damage information associated with the location. The one or more processors are further configured to automatically identify a plurality of maintenance conditions based on the input data and a three-dimensional model of the aircraft, the three-dimensional model comprising a first layer associated with a first set of structural features of a portion of the aircraft and a second layer associated with a second set of structural features of the portion of the aircraft, the first set of structural features distinct from the second set of structural features. The one or more processors are further configured to obtaining a damage limit from a digital service manual, the damage limit based at least on the plurality of maintenance conditions. The one or more processors are further configured to generate a maintenance disposition based at least on the damage limit and the input data.

In another particular implementation, a (optionally non-transitory) computer-readable medium stores instructions that, when executed by one or more processors, cause the one or more processors to receive input data identifying an aircraft, a location on the aircraft, and damage information associated with the location. The instructions further cause the one or more processors to automatically identify a plurality of maintenance conditions based on the input data and a three-dimensional model of the aircraft, the three-dimensional model comprising a first layer associated with a first set of structural features of a portion of the aircraft and a second layer associated with a second set of structural features of the portion of the aircraft, the first set of structural features distinct from the second set of structural features. The instructions further cause the one or more processors to obtain a damage limit from a digital service manual, the damage limit based at least on the plurality of maintenance conditions. The instructions further cause the one or more processors to generate a maintenance disposition based at least on the damage limit and the input data.

In another particular implementation, a device includes means for receiving input data identifying an aircraft, a location on the aircraft, and damage information associated with the location. The device also includes means for automatically identifying a plurality of maintenance conditions based on the input data and a three-dimensional model of the aircraft, the three-dimensional model comprising a first layer associated with a first set of structural features of a portion of the aircraft and a second layer associated with a second set of structural features of the portion of the aircraft, the first set of structural features distinct from the second set of structural features. The device also includes means for obtaining a damage limit from a digital service manual, the damage limit based at least on the plurality of maintenance conditions. The device also includes means for generating a maintenance disposition based at least on the damage limit and the input data.

### BRIEF DESCRIPTION OF THE DRAWINGS

FIG. 1 depicts an example system for automated damage assessment, in accordance with some examples of the subject disclosure.
FIG. 2 depicts an example excerpt from an exemplary service repair manual, in accordance with some implementations of the subject disclosure.
FIG. 3 illustrates a portion of a knowledge graph describing a corresponding portion of the digital service manual, in accordance with some implementations of the subject disclosure.
FIG. 4 illustrates an example layer of a three-dimensional model of an aircraft, in accordance with some implementations of the subject disclosure.
FIG. 5 illustrates another example layer of a three-dimensional model of an aircraft, in accordance with some implementations of the subject disclosure.
FIG. 6 illustrates another example layer of a three-dimensional model of an aircraft, in accordance with some implementations of the subject disclosure.
FIG. 7 illustrates another example layer of a three-dimensional model of an aircraft, in accordance with some implementations of the subject disclosure.
FIG. 8 illustrates another example layer of a three-dimensional model of an aircraft, in accordance with some implementations of the subject disclosure.
FIG. 9 illustrates another example layer of a three-dimensional model of an aircraft, in accordance with some implementations of the subject disclosure.
FIG. 10A illustrates an example portion of a digital image for use in identifying a plot point of a damage instance, in accordance with some implementations of the subject disclosure.
FIG. 10B illustrates an example portion of a digital image highlighting sub-images indicating damage to the aircraft for use in identifying the plot point of the damage instance, in accordance with some implementations of the subject disclosure.
FIG. 10C illustrates an example portion of a digital image reconstituting the digital image to include a highlight of the damage instance for use in identifying the plot point of the damage instance, in accordance with some implementations of the subject disclosure.
FIG. 10D illustrates an example portion of a digital image including an indication of a plot point associated with a damage instance, in accordance with some implementations of the subject disclosure.
FIG. 11A illustrates an example digital image showing a boundary of a damage region of an aircraft, in accordance with some implementations of the subject disclosure.
FIG. 11B illustrates an example digital image showing a set of boundary points along the boundary of the damage region, in accordance with some implementations of the subject disclosure.
FIG. 11C illustrates an example digital image superimposing the digital image of FIG. 11B on portions of a layer of a three-dimensional model of the aircraft, in accordance with some implementations of the subject disclosure.
FIG. 12 is a flow chart of an example method for automated damage assessment, in accordance with some examples of the subject disclosure.
FIG. 13 is a block diagram of a computing environment including a computing device configured to support aspects of computer-implemented methods and computer-executable program instructions (or code), in accordance with some examples of the subject disclosure.

### DETAILED DESCRIPTION

For efficient airline operation, the first two hours after a flight lands-during which inspection and damage evaluation of the aircraft structure are performed-are crucial. As aircraft manuals become more complex, the Structural Repair Manual ("SRM"), has become an extensive document consisting of thousands of pages. Searching for the relevant information has become a tedious task. Other attempts to digitize the SRM have required maintenance personnel to input and/or look up data (e.g., maintenance conditions associated with damage locations) that could already be known to an appropriate electronic version of the SRM. The systems and methods disclosed herein simplify maintenance disposition by using updated three-dimensional models of the aircraft to define the essential damage inputs required for use within the SRM. A customized knowledge graph-based application can use these inputs to present disposition options to the system user.

A technical advantage of the subject disclosure is the ability to use a plot location associated with a damage instance, where the plot location is tied to the three-dimensional model of the aircraft. The systems and methods can display required input values and process the inputs to search a digital SRM, making it easier, faster and possible to retrieve all the relevant information.

Another technical advantage of the subject disclosure is that it enables flight crews, mechanics and engineers-who are required to inspect aircraft for structural damages after each flight to determine if there is new damage-to efficiently ensure the damage is within allowable damage limits ("ADL"). For example, the systems and methods disclosed herein can include the zones and areas related to allowable damage/repair limits. By automatically identifying maintenance conditions based on input data and the three-dimensional model, the systems and methods disclosed herein can efficiently generate a damage disposition based on the input data and damage limits retrieved from the digital SRM without the need to review thousands of pages of SRM.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

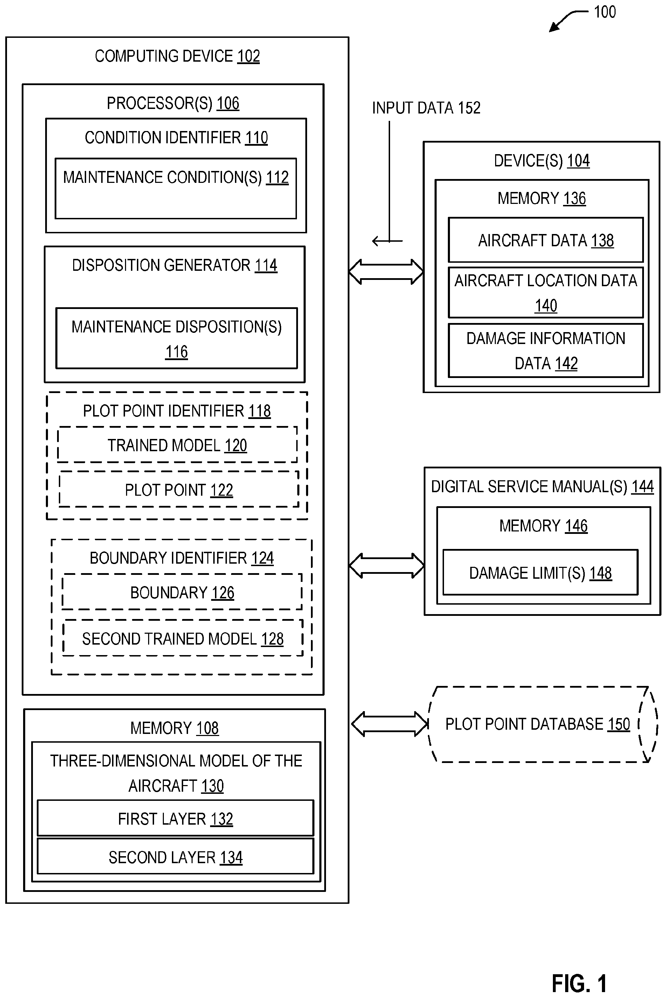

Particular implementations are described herein with reference to the drawings. In the description, common features are designated by common reference numbers throughout the drawings. As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts a system 100 including one or more processors ("processor(s)" 106 in FIG. 1), which indicates that in some implementations the system 100 includes a single processor 106 and in other implementations the system 100 includes multiple processors 106. For ease of reference herein, such features are generally introduced as "one or more" features and are subsequently referred to in the singular or optional plural (as indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1 depicts an example system 100 for automated damage assessment, in accordance with some examples of the subject disclosure. In some implementations, the system 100 includes a computing device 102 configured to communicate with one or more devices 104 and/or one or more digital service manuals 144.

In some implementations, the device(s) 104 can include, correspond to, or be included within a smartphone or other handheld electronic device used by aircraft maintenance personnel. Aircraft maintenance personnel in an airport gate environment can use a smartphone equipped with a camera to take a picture of external damage to an aircraft in the gate environment, record and/or enter information about the aircraft itself, the damage type, the damage size, etc.

The device(s) 104 can include, correspond to, or be included within an electronic device that includes a memory 136 storing aircraft data 138, aircraft location data 140, and damage information data 142. The aircraft data 138 can include information identifying the particular aircraft type, manufacturer, model, tail number, etc. The aircraft location data 140 can include data associated with a position on the particular aircraft where damage is located. For example, the aircraft location data 140 can indicate a part number, position coordinates, one or more other identifiers associated with a location on the particular aircraft, or some combination thereof. The damage information data 142 can include data associated with a type of damage, an extent of damage, or some combination thereof. For example, the damage information data 142 can indicate whether a particular instance of damage to the particular aircraft is surface damage (e.g., nick, gouge, scratch, etc.), a dent, crack (e.g., broken fiber), hole, delamination disbond, heat damage, lightning strike away from a fastener, lightning strike at a fastener, etc. The damage information data 142 can also indicate one or more physical dimensions associated with the damage (e.g., depth, length, width, area, etc.). In some implementations, the device(s) 104 can be configured to communicate input data 152 identifying an aircraft, a location on the aircraft, and damage information associated with the location to the computing device 102.

In some implementations, the digital service manual(s) 144 can include, correspond to, or be included within an electronic device that includes a memory 146 storing one or more damage limits 148. The damage limit(s) 148 can include one or more values indicating whether a particular damage instance can be corrected in a particular environment when certain conditions are met. For example, the damage limit(s) 148 can indicate allowable damage limit(s) that indicate whether the aircraft can continue in operation without correcting the damage instance. The damage limit(s) 148 can also indicate repairable damage limit(s) that indicate whether the damage instance can be repaired within certain parameters (e.g., in a certain amount of time, within the gate environment, etc.).

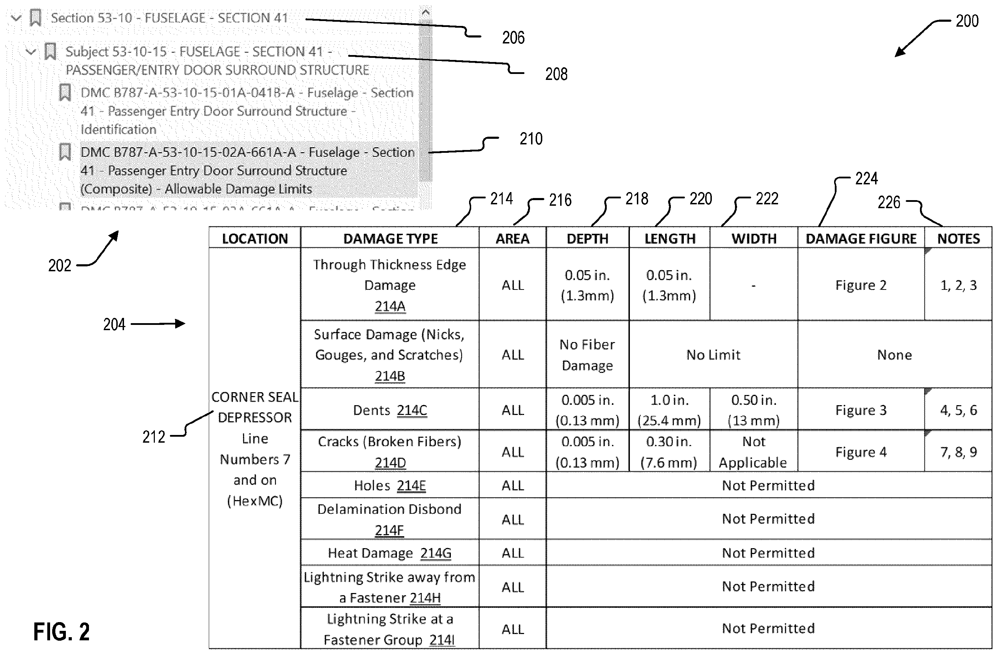

In some aspects, the damage limit(s) 148 can be associated with a broader content of information regarding a particular aircraft type for a particular digital service manual 144. For example, the digital service manual 144 can include information about the damage limit(s) 148, as well as the various conditions that must be met in order for those damage limits to apply. In a particular example, as illustrated below with reference to FIG. 2, the digital service manual 144 can include information indicating that a dent at the corner seal depressor for line numbers seven and on has an allowable damage limit of 0.013-mm of depth and 7.6-mm in length.

The digital service manual 144 can also include various notes. For example, a note in the digital service manual 144 can indicate that the user should make sure that the door function is not impaired and to perform a particular door function check. As another example, a note can indicate that a particular damage instance must be a minimum of 6.0 inches away from any other damage, the particular damage instance must be a minimum of twice the instance's diameter from any fasteners, no more than three areas of damage are allowed on any part, etc. In a particular aspect, the content of the digital service manual(s) 144 can be stored at the memory 146 as a knowledge graph data structure, as described in more detail below with reference to FIGS. 2-3.

In some implementations, the computing device 102 can be configured to receive, from the device(s) 104, the input data 152 identifying the aircraft (e.g., from the aircraft data 138), the location on the aircraft (e.g., from the aircraft location data 140), and damage information associated with the location (e.g., from the damage information data 142). The computing device 102 can include one or more processors 106 coupled to a memory 108 that includes instructions that, when executed by the processor(s) 106, cause the processor(s) 106 to execute certain functions such as those detailed below.

The processor(s) 106 can include one or more components configured to execute one or more of those functions, including a condition identifier 110. In some implementations, the condition identifier 110 can be configured to automatically identify a plurality of maintenance conditions 112 based on the input data 152 and a three-dimensional model 130 of the aircraft, the three-dimensional model 130 including a first layer 132 associated with a first set of structural features of a portion of the aircraft and a second layer 134 associated with a second set of structural features of the portion of the aircraft, where the first set of structural features is distinct from the second set of structural features, as described in more detail below and with reference to FIGS. 2-7.

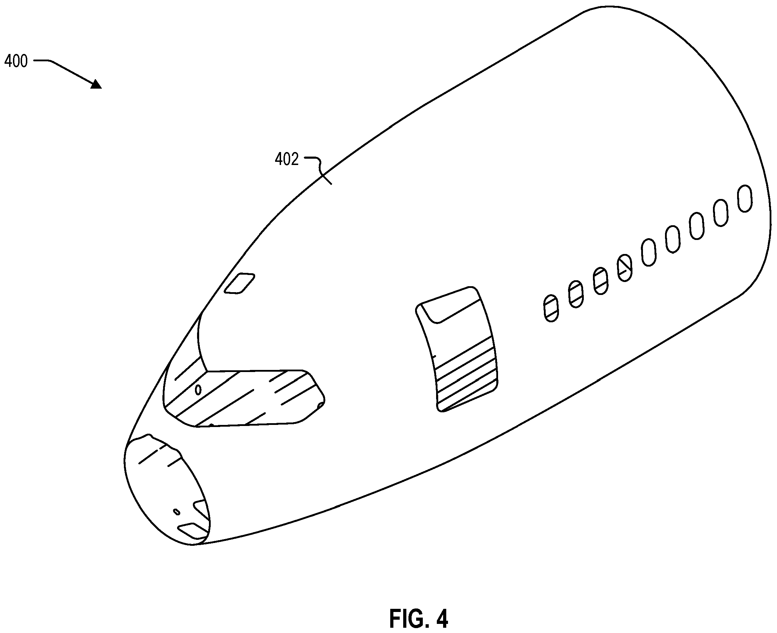

In a particular configuration, the first layer 132 and the second layer 134 are selected from a group including a part number layer, an allowable damage limit zone layer, an allowable damage limit area layer, a repairable damage limit zone layer, a material thickness layer, and a fastener layer. Each of these exemplary layers is described in more detail below with reference to FIGS. 4-9. The plurality of maintenance conditions 112 based on the input data 152 and the three-dimensional model 130 of the aircraft can include, for example, the requisite ADL zone and/or areas associated with a particular portion of the aircraft, proximity of a damage instance to one or more fasteners of the aircraft, the position of boundaries of various parts of the aircraft, etc.

In some implementations, the condition identifier 110 can also be configured to obtain the damage limit(s) 148 from the digital service manual 144, where the damage limit(s) 148 are based at least on the plurality of maintenance conditions 112. For example, as illustrated below with reference to FIG. 2, a damage limit for a dent in the passenger entry door surround structure including the corner seal depressor, in all ADL areas, can include an allowable damage limit of 0.005 inches in depth, 1.0 inches in length, 0.50 inches in width, or some combination thereof.

The processor(s) 106 can also include a disposition generator 114. In some implementations, the disposition generator 114 can be configured to generate a maintenance disposition 116 based at least on the damage limit 148 and the input data 152. For example, the disposition generator 114 can be configured to identify that a particular damage instance is allowable because the damage instance is of a size and type, and at a particular location on a particular aircraft that allows for the aircraft to continue operation with the continued existence of the damage instance. Using the example above, if the particular damage instance is a dent in the corner seal depressor of the passenger entry door surround structure that is 0.004 inches in depth, 0.8 inches in length, and 0.40 inches in width, the disposition generator 114 can generate a maintenance disposition indicating that the aircraft can continue operating. Other maintenance dispositions include indications that the aircraft can be repaired on site, that the aircraft can be repaired in a maintenance facility, that the aircraft must be pulled from service, etc.

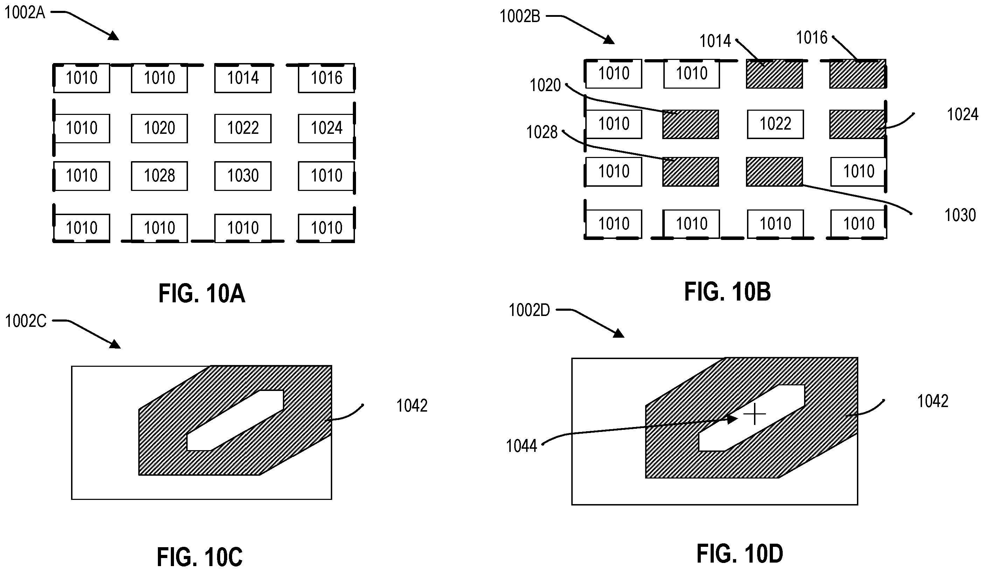

In some aspects, the processor(s) 106 can optionally include a plot point identifier 118. The plot point identifier 118 can be configured to identify a plot point 122 associated with a center point of a particular damage instance, as described in more detail below with reference to FIGS. 10A-10D. For example, in configurations in which the device 104 includes a camera and the maintenance personnel take a digital image of damage to the aircraft, the device 104 can be configured to communicate, as part of the input data 152, data associated with the digital image of damage to the electronic device 102. In some configurations, the plot point 122 can be used to identify the location on the aircraft at which the damage can be found. In the same or alternative configurations, the plot point 122 can be communicated to a plot point database 150.

In some implementations, the computing device 102 can optionally be in communication with a plot point database 150. The plot point database 150 can be any appropriate electronic device configured to store a plurality of plot points for later access by the computing device 102. For example, the plot point database 150 can be a database stored externally to the computing device 102, integrated into an electronic device with some or all of the computing device 102, stored at the memory 108 of the computing device 102, or some combination thereof.

In some aspects, the computing device 102, the device(s) 104, or some combination thereof can be configured to use the data stored at the plot point database 150 to analyze the input data 152 to determine whether a particular damage instance is associated with new damage, existing damage, or some combination thereof. In a particular aspect, the processor(s) 106 of the computing device 102 can be configured to identify the plot point 122 associated with a new damage instance. The processor(s) 106 can be configured to compare the plot point 122 to historical plot points stored at the plot point database 150 to see if a match exists. If a match exists, the processor(s) 106 can be further configured to determine whether the input data 152 indicates a change to the damage that gave rise to the historical plot point. If no change exists, the processor(s) 106 can be configured to generate a message indicating that the current damage instance has been previously recorded.

If no match exists, the processor(s) 106 can be configured to search for other plot points 122 in the plot point database 150 that have been recorded for the same aircraft that are within a threshold distance from the current damage instance. For example, a particular digital service manual 144 can indicate one or more maintenance conditions 112 dependent on the proximity of the current damage instance to historical damage instances. To illustrate, if a first dent in a particular portion of the aircraft would normally be within allowable damage limits but is within six inches of one or more second dents, the maintenance disposition for the first dent can indicate that the aircraft must be repaired before returning to service. As an additional example, the processor(s) 106 can be configured to prepopulate the input data 152 with data from relevant historical damage instances in order to determine if such maintenance conditions 112 are met.

In a particular configuration, the plot points 122 stored at the plot point database 150 can be used to generate, among other things, reporting indicating historical damage trends associated with particular aircraft types, particular damage types, particular damage locations, potential problem areas for future damage prevention, etc. In another particular configuration, the plot points 122 stored at the plot point database 150 can be used by the computing device 102 to more efficiently identify a new damage instance versus an older damage instance that already has an associated maintenance disposition.

In a particular aspect, the plot point identifier 118 can be configured to use a first trained model 120 to identify the plot point 122. As illustrated below with reference to FIGS. 10A-10D, the first trained model 120 can take as input some or all of the input data 152 associated with the digital image of the damage to the aircraft and generate the plot point 122.

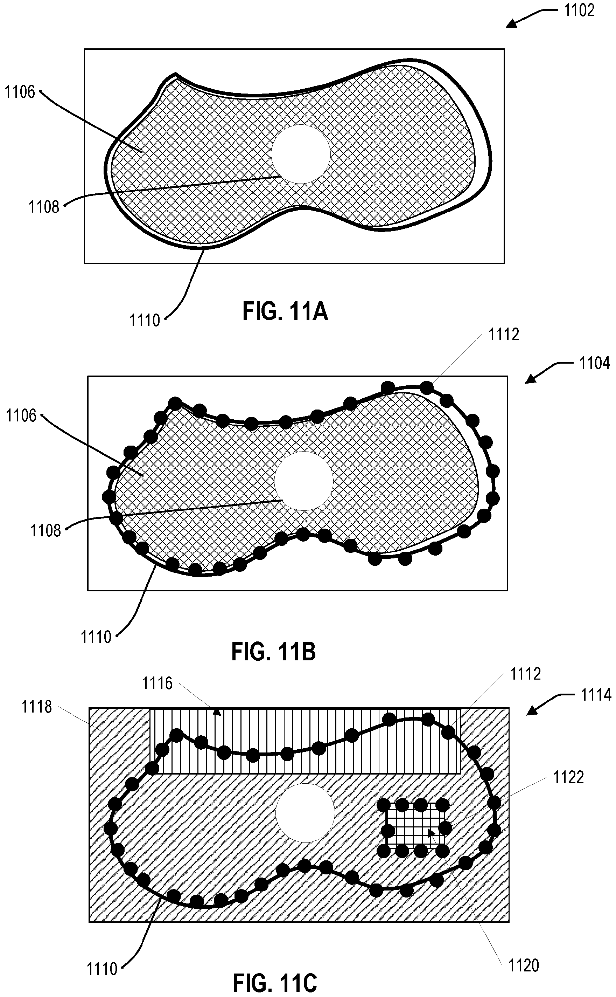

In the same or alternative aspects, the processor(s) 106 can include a boundary identifier 124 configured to automatically identify a boundary 126 of a damage region for the aircraft. As described in more detail below with reference to FIGS. 11A-11C, the boundary identifier 124 can be configured to automatically identify a plurality of points associated with a length of the boundary 126 of the damage region. In a particular aspect, the user of the device(s) 104 can initially indicate a preliminary boundary (e.g., by drawing a line around a digital image of the damage region). The boundary identifier 124 can be configured to digitize that preliminary boundary and store data associated with that digitized preliminary boundary as the boundary 126.

In some aspects, the boundary 126 can encompass visible and invisible damage to the aircraft. In a particular configuration, the boundary identifier 124 can be configured to identify the boundary 126 by using a second trained model 128 to identify a set of boundary points along the boundary 126. The second trained model 128 can be configured to generate a digitized boundary shape from the set of boundary points, where the digitized boundary shape matches the boundary 126 within a boundary match threshold (e.g., 95%). In some aspects, data associated with the boundary 126 can be stored at the memory 108, the plot point database, the memory 136 of the device(s) 104, or some combination thereof.

As described in more detail below with reference to FIGS. 11A-11C, the condition identifier 110 can be further configured to identify the plurality of maintenance conditions 112 by automatically identifying the plurality of maintenance conditions 112 for each of the plurality of boundary points. The processor(s) 106 can be configured to identify a subset of the boundary points associated with a unique set of associated maintenance conditions 112. The processor(s) 106 can be configured to then obtain the damage limit 148 from the digital service manual 144 based on the subset of the boundary points.

In operation, maintenance personnel can use the device(s) 104 to capture data related to an aircraft, a location on the aircraft, and damage information associated with the location for a particular damage instance to the aircraft. The device(s) 104 can communicate the input data 152 identifying the aircraft, the location of the aircraft, and the damage information to the electronic device 102. For example, the maintenance personnel can take a digital image of damage to the aircraft and input certain values (e.g., the size of the damage, preliminary boundary of the damage, coordinates associated with digital image, etc.) associated with the damage.

The computing device 102 can receive the input data 152 and automatically identify a plurality of maintenance conditions 112 based on the input data and a three-dimensional model 130 of the aircraft. For example, the computing device 102 can identify that, because the damage instance is located at the corner seal depressor of the passenger entry door surround structure on Section 41 of the fuselage, the computing device 102 needs to know the damage type, the ADL area, and certain dimensions associated with the damage instance. Using the three-dimensional model 130 of the aircraft, the computing device 102 can identify the damage limit from the digital service manual based on the damage type (e.g., a dent), the ADL area, and the size of the damage instance. If the damage instance satisfies the damage limit (e.g., the dent is smaller than the ADL for dents in that location on the aircraft), the computing device can generate the maintenance disposition 116 (e.g., indicating that the aircraft can continue in operation).

In some implementations, the system 100 can also be configured to perform, enable, or some combination thereof additional functionality once the maintenance disposition 116 is generated. For example, the computing device 102 can be configured to generate one or more messages to maintenance personnel indicating the damage disposition, instructing maintenance personnel how to repair damage, instructing personnel to order materiel needed for repair, inform a maintenance hub of needed repair, inform personnel of a potential scheduling change due to maintenance, etc. The computing device 102 can also be configured to automatically order one or more parts for repair, update or alter a schedule for one or more aircraft (including scheduling a substitute aircraft for a damaged aircraft that needs additional repair), update or alter a maintenance schedule for one or more aircraft (including scheduling the damaged aircraft for repair, modifying a repair schedule to accommodate the damaged aircraft, etc.), schedule maintenance personnel for repair, other appropriate scheduling, or any combination thereof

The computing device 102 can also be configured to enable improved inventory management for an aircraft operator. For example, an operator can analyze maintenance dispositions associated with one or more aircraft over a period of time to determine if a particular damage type is more common than other damage types. To illustrate, an aircraft operator can determine that lightning strikes to a particular portion of the aircraft are more common for some aircraft that fly particular routes than for other aircraft. The operator can then modify materiel inventory levels to account for the more common damage type. For example, the operator can maintain higher inventory levels of a particular fastener, a particular material, etc. needed to repair damage due to a lightning strike. The computing device 102 can also be configured to enable other analytical tools to, for example, analyze fleet-wide damage statistics to improve aircraft construction or design. One or more components to perform such operations can be incorporated into the system 100, part of another system, or some combination thereof.

In some implementations, the computing device 102 can be associated with, integrated into, or otherwise included in an aircraft, a portable electronic device such as a smartphone or tablet computer, etc. The system 100 can also include components not illustrated in FIG. 1. For example, the computing device 102 can also include a receiver configured to receive the input data 152 from the device(s) 104. The receiver can be configured to receive the data, for example, via a computer bus. As an additional example, the system 100 can also include one or more input/output interfaces, one or more network interfaces, etc. Further, although FIG. 1 illustrates the memory 108 of the system 100 as storing certain data, more, fewer, and/or different data can be present within the memory 108 without departing from the scope of the subject disclosure.

Additionally, although FIG. 1 illustrates certain operations occurring within the computing device 102, these operations can be performed by other components of the system 100 without departing from the scope of the subject disclosure. For example, one or more components external to the computing device 102 can be configured to host or otherwise incorporate some or all of the components of the plot point identifier 118, the boundary identifier 124, or some combination thereof. Such component(s) can be located remotely from the computing device 102 and accessed via a modem of the computing device 102.

Further, although FIG. 1 illustrates the computing device 102, the device(s) 104, the digital service manual(s) 144, and the plot point database 150 as separate, other configurations are possible without departing from the scope of the subject disclosure. For example, the computing device 102 and the device(s) 104 can be integrated into a portable electronic device such as a tablet computer or smartphone. As an additional example, one or more components of the computing device 102 can be distributed across a plurality of computing devices (e.g., a group of processor cores).

Still further, although FIG. 1 illustrates the computing device 102, the device(s) 104, the digital service manual(s) 144, and the plot point database 150 as separate, other configurations are possible without departing from the scope of the subject disclosure. For example, one or more components of the condition identifier 110 and/or the disposition generator 114 can be distributed across a plurality of computing devices (e.g., a smartphone and a remote server). As a further example, components of the device(s) 104, the digital service manual(s) 144, and the plot point database 150 can be integrated into one or more electronic devices distinct from the electronic device 102, integrated with the electronic device 102, or some combination thereof.

FIG. 2 depicts an example excerpt 200 from an exemplary structural repair manual ("SRM"), in accordance with some implementations of the subject disclosure. The excerpt 200 can be organized according to exemplary organization schema 202, which narrows from a part number 206 for a particular aircraft to a subsequent section 208 of the part number 206 to one or more subsections 210 of the section 208. The content associated with the subsection 210 can include a table 204 illustrating allowable damage limits 218, 220, 222 for a particular portion 212 of an aircraft, where the allowable damage limits 218, 220, 222 are based on a damage type 214, the particular portion 212 of the aircraft, and the damage area 216.

In the particular example of FIG. 2, the table 204 describes a number of allowable damage limits 218, 220, 222 for the corner seal depressor (exemplary portion 212) of the passenger entry door surround structure (composite) (exemplary subsection 210) of the passenger-entry door surround structure (exemplary section 208) of the fuselage section 41 (part number 206). Table 204 illustrates that a dent (e.g., damage type 214C) in the particular portion 212 (in this example the corner seal depressor) has allowable damage limits corresponding to maximum dimensions of 1.0 inches for length damage limit 220, 0.50 inches for width damage limit 222, and 0.005 inches for depth damage limit 218. The digital service manual can also include a damage figure 224 illustrating the damage type 214, dimensions for damage limits 218, 220, 222, etc. The digital service manual can also further include one or more notes 226 associated with a particular maintenance issue. The note(s) 226 can indicate additional information associated with the digital service manual, as described in more detail above with reference to FIG. 1. For example, a note 226 can indicate that a particular damage instance must be at less six inches away from any other damage in order for the damage limits 218, 220, 222 to apply.

Although FIG. 2 illustrates a specific exemplary excerpt 200 from an SRM, other configurations, content, etc. of the SRM can be present without departing from the scope of the subject disclosure. For example, the SRM can illustrate maintenance conditions for a different type of aircraft, another portion of the same type of aircraft, be organized in a different manner, etc. Further, although specific numbers are used in FIG. 2 to illustrate the exemplary allowable damage limits for this portion of the SRM, other numbers could be used without departing from the scope of the subject disclosure. For example, the allowable damage limits can be different for another type of aircraft, for a different portion of the same aircraft, for different materials used for the same portion of the same aircraft, allowable damage limits can change over time, etc.

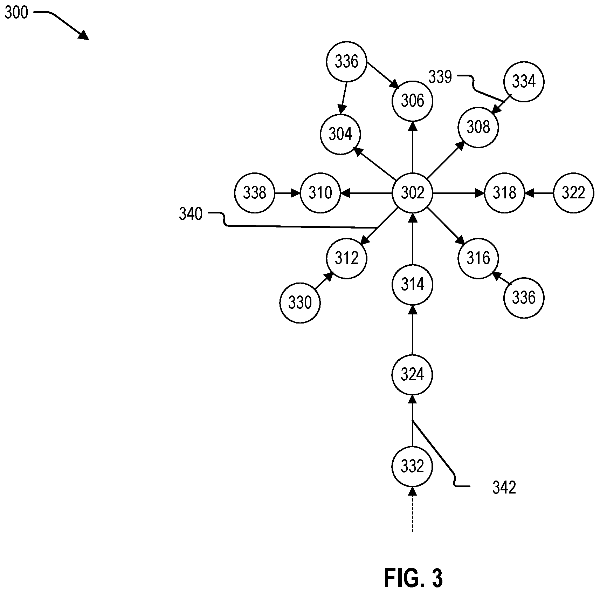

In some implementations, the content of the SRM can be digitized to be stored as a digital service manual (e.g., in a computer-readable storage medium such as the memory 108 or the memory 146 of FIG. 1). The content of the digital service manual can be stored as any appropriate data structure. For example, some or all of the content of the digital service manual can be stored as a knowledge graph, as described in more detail below with reference to FIG. 3.

FIG. 3 illustrates a portion of a knowledge graph 300 describing a corresponding portion of the digital service manual, in accordance with some implementations of the subject disclosure. In the example of FIG. 3, the knowledge graph 300 describes the excerpt 200 of the digital service manual of FIG. 2. In the exemplary knowledge graph 300, a node can be connected to one or more additional nodes through a connection that describes a relationship between the node(s). The relationship can be directional in that the relationship can indicate the direction in which data flows from node to node.

For example, FIG. 3 illustrates the portion of the knowledge graph 300 associated with the node 302 representing the Passenger Entry Door Surround Structure - Corner Seal Depressors. The node 302 can be connected to various nodes 304, 306, 308, 310, 312, 316, 318 representing various maintenance areas related to the physical location on the aircraft where the Passenger Entry Door Surround Structure - Corner Seal Depressors is located, as described in more detail below with reference to FIGS. 4-9. In the exemplary portion of the knowledge graph 300 illustrated in FIG. 3, each of the nodes 304, 306, 308, 310, 312, 316, 318 are associated with all maintenance areas, as illustrated in the excerpt 200 of the digital service manual of FIG. 2. In some aspects, the relationship between the nodes 304, 306, 308, 310, 312, 316, 318 and the node 302 are illustrated via connections 340. In the example of FIG. 3, the connection 340 illustrates that the node 302 contains the nodes 304, 306, 308, 310, 312, 316, 318. In other aspects, the connection 340 can illustrate other kinds of relationships between the nodes 304, 306, 308, 310, 312, 316, 318 and the node 302. For example, the connections 339, 342 described below illustrate other relationships.

In some aspects, each of the nodes 304, 306, 308, 310, 312, 316, 318 has a corresponding one or more additional nodes related to it. For example, the node 310 is related to the nodes 302, 338; the node 308 is related to the nodes 302, 334; the node 318 is related to the nodes 302, 322; the node 312 is related to the nodes 302, 330; and the node 316 is related to the nodes 302, 336. In each of these examples, the nodes 338, 334, 330, 336, 322 are related to the respective nodes 310, 308, 312, 316, 318 via a connection 339. In the example of FIG. 3, the connection 339 illustrates that the node 334 provides an allowable damage limit to the node 308. A similar relationship holds for the exemplary nodes 310, 308, 312, 316, 318. Although a particular relationship is illustrated for various nodes of the knowledge graph 300, other relationships are possible without departing from the scope of the subject disclosure. For example, FIG. 3 illustrates that the node 336 provides an allowable damage limit to each of the nodes 304, 306. Other relationships (e.g., one-to-many, etc.) are also possible.

In the example of FIG. 3, the portion of the knowledge graph 300 centered around the node 302 is related to other portions of the knowledge graph 300. For example, the portion of the knowledge graph 300 illustrating some of the content of the digital service manual for the corner seal depressor portion 212 of FIG. 2 is also related to content of the digital service manual for other portions of the aircraft. In a particular configuration, the node 302 representing the Passenger Entry Door Surround Structure - Corner Seal Depressors is related to the node 314 representing the subsection 210 of FIG. 2 describing the Passenger Entry Door Surround Structure (Composite), which is in turn related to the node 324 representing the section 208 of FIG. 2 describing the Passenger/Entry Door Surround Structure, which is in turn related to the node 332 representing the part number 206 of FIG. 2 representing Section 41 of the fuselage of the aircraft. Each of the nodes 314, 324, 332 are related via a connection 342, which indicates that each of the nodes contains the node to which it points. In the larger knowledge graph 300, each of the nodes 314, 324, 332 can have a number of additional nodes to which each is related.

Although FIG. 3 illustrates various nodes and relationships between said nodes, more, fewer, and/or different nodes can be present within the knowledge graph 300 without departing from the scope of the subject disclosure. Additionally, the connections between the various nodes of the knowledge graph 300 can reflect different types of relationships than those illustrated in FIG. 3 without departing from the scope of the subject disclosure.

FIG. 4 illustrates an example layer 400 of a three-dimensional model of an aircraft, in accordance with some implementations of the subject disclosure. Generally, the example layer 400 corresponds to the first layer 132, the second layer 134, or both, of the three-dimensional model 130 of the aircraft of FIG. 1. The exemplary layer 400 illustrates a part number layer indicative of one or more part numbers 402 of an aircraft. FIG. 4 illustrates section 41 of the fuselage of a Boeing^{®} 787 (Boeing is a registered trademark of The Boeing Company, a Delaware corporation).

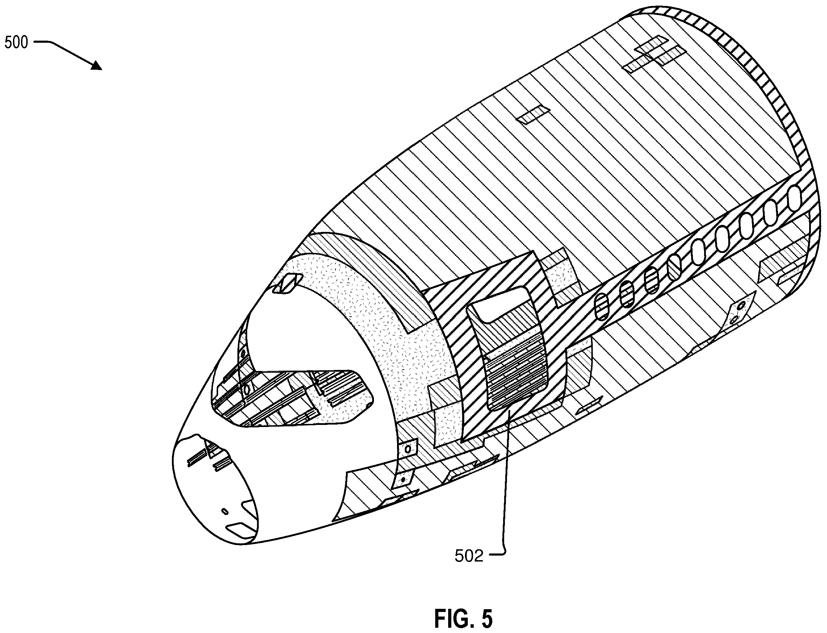

FIG. 5 illustrates an example layer 500 of a three-dimensional model of an aircraft, in accordance with some implementations of the subject disclosure. Generally, the example layer 500 corresponds to the first layer 132, the second layer 134, or both, of the three-dimensional model 130 of the aircraft of FIG. 1. The exemplary layer 500 illustrates an allowable damage limit ("ADL") zone layer. FIG. 5 illustrates a number of different ADL zones over a portion of the aircraft generally contiguous with the portion of the aircraft shown in the example layer 400 of FIG. 4.

In some implementations, the ADL zones of the layer 500 are associated with one or more geometric regions of the aircraft surface that can correspond to physical zones of various sizes. In some aspects, an ADL zone can correspond to one or more sections of the digital service manual. For example, a zone 502 corresponds to the subsection 210 of the digital service manual of FIG. 2 associated with the Passenger/Entry Door Surround Structure-Allowable Damage Limits. Additional ADL zones are illustrated in FIG. 5 by various different shadings.

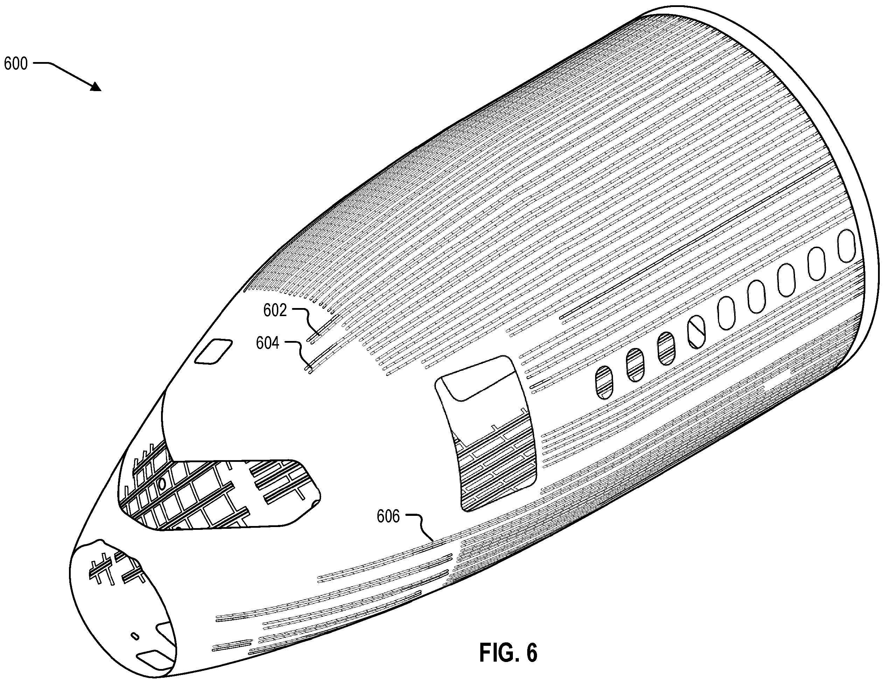

FIG. 6 illustrates an example layer 600 of a three-dimensional model of an aircraft, in accordance with some implementations of the subject disclosure. Generally, the example layer 600 corresponds to the first layer 132, the second layer 134, or both, of the three-dimensional model 130 of the aircraft of FIG. 1. The exemplary layer 600 illustrates an allowable damage limit ("ADL") area layer. FIG. 6 illustrates a number of different ADL areas over a portion of the aircraft generally contiguous with the portion of the aircraft shown in the example layer 400 of FIG. 4.

In some implementations, the ADL areas of the layer 600 are associated with one or more cross-sectional features of the aircraft skin interface. For example, a first area can correspond to an outer portion of an aircraft body panel, a second area can correspond to an inner area at least partially surrounded by the first area, and a third area can correspond to another inner area at least partially surrounded by the second area such that the first, second, and third areas form the aircraft body panel. Other configurations are possible without departing from the scope of the subject disclosure. In some aspects, an ADL area can correspond to one or more sections of the digital service manual. For example, the areas 602, 604, 606 can be considered in the damage area 216 of FIG. 2.

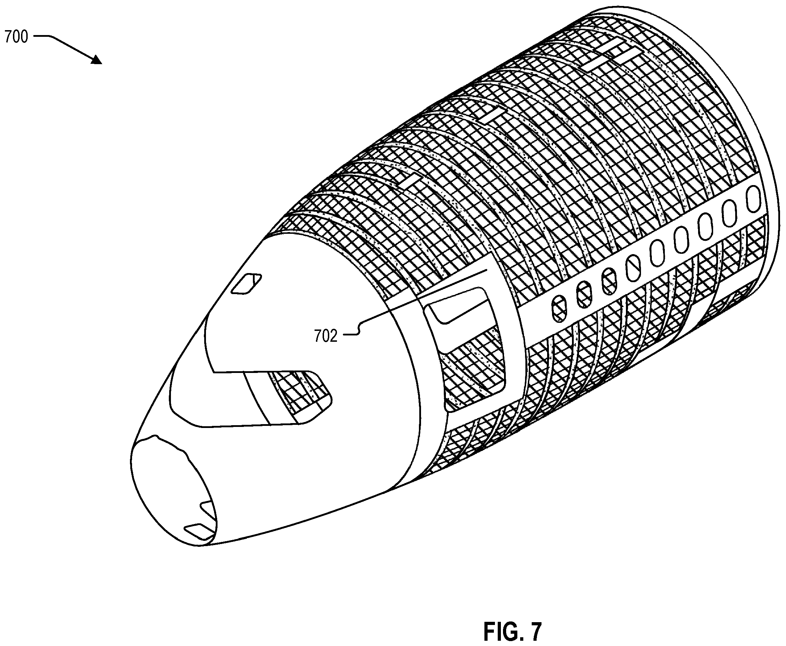

FIG. 7 illustrates an example layer 700 of a three-dimensional model of an aircraft, in accordance with some implementations of the subject disclosure. Generally, the example layer 700 corresponds to the first layer 132, the second layer 134, or both, of the three-dimensional model 130 of the aircraft of FIG. 1. The exemplary layer 700 illustrates a repairable damage limit ("RDL") zone layer. FIG. 7 illustrates a number of different RDL zones over a portion of the aircraft generally contiguous with the portion of the aircraft shown in the example layer 400 of FIG. 4.

In some implementations, the RDL zones of the layer 700 are associated with one or more geometric regions of the aircraft surface that can correspond to physical zones of various sizes. In some aspects, an RDL zone can correspond to one or more sections of the digital service manual. The RDL zone can correspond to one or more sections of the digital service manual different from the section(s) of the digital service manual for the allowable damage limits for the aircraft. For example, the RDL zone 702 corresponds to a subsection of the digital service manual of FIG. 2 associated with the Passenger/Entry Door Surround Structure-Repairable Damage Limits. Additional RDL zones are illustrated in FIG. 7 by various different shadings.

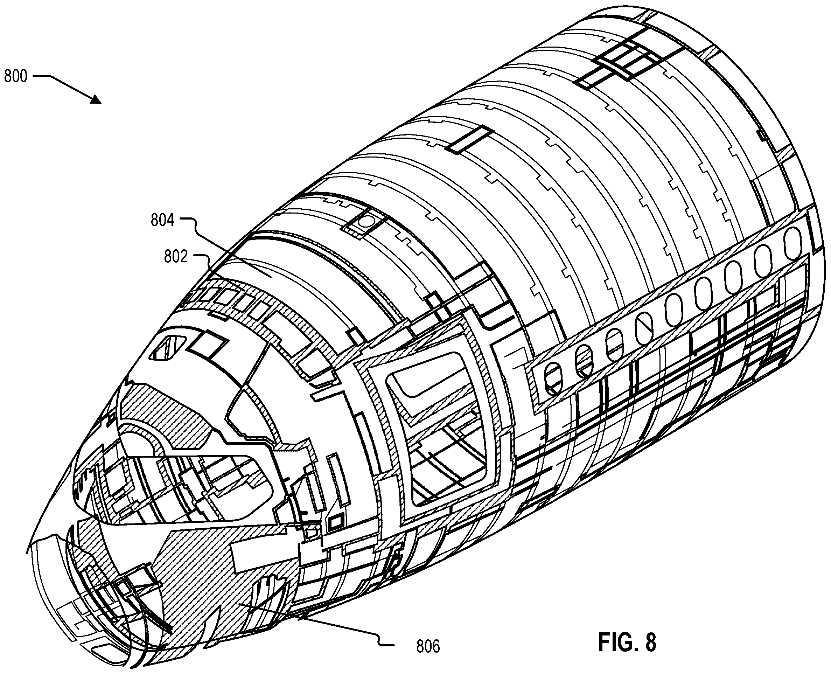

FIG. 8 illustrates an example layer 800 of a three-dimensional model of an aircraft, in accordance with some implementations of the subject disclosure. Generally, the example layer 800 corresponds to the first layer 132, the second layer 134, or both, of the three-dimensional model 130 of the aircraft of FIG. 1. The exemplary layer 800 illustrates a material thickness layer. FIG. 8 illustrates a number of different portions 802, 804, 806 of the aircraft, each with a different material thickness.

In some aspects, identifying the various material thicknesses associated with a particular damage instance can affect the extent of non-visible damage associated with the particular damage instance while making it more difficult to identify the non-visible damage to the aircraft using traditional measurement tools. For example, a damage instance can cross material thickness portions (e.g., portions 802, 804). A probe used to identify the extent of the damage instance can return improper or inconsistent readings as the probe moves from the material thickness portion 802 to the material thickness portion 804. Accounting for the locations and extents of the various material thickness portions can improve the accuracy of damage identification and efficiency of maintenance remediation.

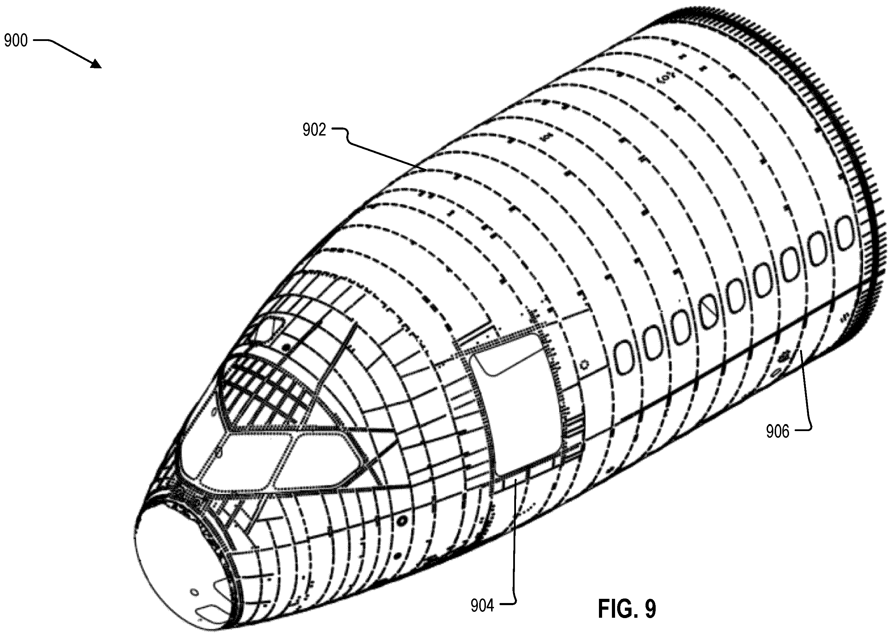

FIG. 9 illustrates an example layer 900 of a three-dimensional model of an aircraft, in accordance with some implementations of the subject disclosure. Generally, the example layer 900 corresponds to the first layer 132, the second layer 134, or both, of the three-dimensional model 130 of the aircraft of FIG. 1. The exemplary layer 900 illustrates a fastener layer, indicating locations of a plurality of structural fasteners 902, 904, 906 in a portion of the aircraft generally contiguous with the portion of the aircraft shown in the example layer 400 of FIG. 4.

In some implementations, the locations of the fasteners 902, 904 can affect the damage limit and/or maintenance disposition for a particular damage instance. For example, an allowable damage limit for the particular damage instance can change from a particular value as described in more detail above with reference to FIG. 2 to not being available if the particular damage instance is within a threshold distance (e.g., three inches) of a fastener, as indicated by the notes 226 of FIG. 2.

Although FIGS. 4-9 illustrate exemplary layers 400, 500, 600, 700, 800, 900 that include one or more structural features of a particular aircraft, more, fewer, and/or different other layers can be used by the systems and methods disclosed herein without departing from the scope of the subject disclosure. For example, a three-dimensional model for a different type of aircraft can include a plurality of layers that may be the same or different, depending on the aircraft type. Further, each individual layer can describe similar or different structural features than the exemplary layers of FIGS. 4-9 without departing from the scope of the subject disclosure.

In addition to using the plurality of layers of the three-dimensional model 130 of the aircraft of FIG. 1 to identify the plurality of maintenance conditions 112, the processor(s) 106 can also be configured to take data associated with a digital image of damage to the aircraft from the input data 152 to identify the plot point 122 associated with the damage for later use by the processor(s) 106 as described above with reference to FIG. 1 and below with reference to FIGS. 10A-10D.

FIG. 10A illustrates an example portion of a digital image 1002A for use in identifying a plot point (e.g., the plot point 122 of FIG. 1) associated with a damage instance, in accordance with some implementations of the subject disclosure. FIG. 10A illustrates the example portion of the digital image 1002A broken down into sub-images 1010, 1012, 1014, 1016, 1018, 1020, 1022, 1024, 1026, 1018, 1030, 1032, 1034, 1036, 1038, 1040.

In some implementations, one or more electronic components can be configured to identify which (if any) of the sub-images 1010, 1014, 1016, 1020, 1022, 1024, 1028, 1030 indicate damage to the aircraft and which of the sub-images 1010, 1014, 1016, 1020, 1022, 1024, 1028, 1030 surround the sub-image that indicates damage to the aircraft. In the illustrative example of FIG. 10A, the processor(s) 106 can be configured to identify that sub-image 1022 indicates damage to the aircraft and that sub-images 1014, 1016, 1020, 1024, 1028, 1030 surround the sub-image 1022.

FIG. 10B illustrates an example portion of a digital image 1002B highlighting the sub-images 1014, 1016, 1020, 1024, 1028, 1030 that surround the sub-image 1022 indicating damage to the aircraft, in accordance with some implementations of the subject disclosure. In the example of FIG. 10B, the processor(s) 106 of FIG. 1 can be configured to highlight the sub-images 1014, 1016, 1020, 1024, 1028, 1030 indicating damage to the aircraft as part of an image processing algorithm. In other configurations, the processor(s) 106 of FIG. 1 can be configured to select different sub-images for highlighting to indicate that the sub-image 1022 indicates damage to the aircraft.

FIG. 10C illustrates an example portion of a digital image 1002C reconstituting the digital image to include the highlighted sub-images surrounding the damage instance, in accordance with some implementations of the subject disclosure. In the example of FIG. 10C, the processor(s) 106 of FIG. 1 can be configured to reconstitute the digital image to include a highlighted region 1042 including the sub-images surrounding the damage instance.

In operation, the processor(s) 106 of FIG. 1 can receive a digital image indicating a damage instance to a particular aircraft, automatically analyze the digital image to identify a portion of the digital image that indicates damage, and generate an annotated digital image that highlights the portion of the original digital image that indicates the damage to the aircraft. Additionally, the processor(s) 106 can be configured to identify the plot point 122 associated with the damage instance.

FIG. 10D illustrates an example portion of a digital image 1002D including an indication of a plot point associated with a damage instance, in accordance with some implementations of the subject disclosure. In some implementations, the plot point (e.g., the plot point 122 of FIG. 1) can be any point associated with the area of the damage instance. In a particular aspect, the plot point can be a point associated with a center (or centroid) of an area indicating the area of the damage instance. For example, the plot point can be a centroid of an area identified as enclosing the area of the damage instance (e.g., the area identified by the sub-images 1014, 1016, 1020, 1024, 1028, 1030 of FIGS. 10A-10B and illustrated as region 1042).

In a particular aspect, a trained model (e.g., the first trained model 120 of FIG. 1) can be configured to identify the plot point. For example, maintenance personnel, an unmanned aerial vehicle, other maintenance input points, or some combination thereof, can take a digital image of the location of the damage instance. Data associated with the damage can be communicated to a model trained to identify portions of a digital image associated with physical damage to an aircraft. The trained model can be configured to generate a reconstructed digital image that includes the highlighted region 1042. As illustrated in FIGS. 10A-10D, the reconstructed digital image can include a region 1042 around the damaged area, where the region 1042 is formed by highlighting the sub-images 1014, 1016, 1020, 1024, 1028, 1030. In a particular configuration, the trained model can be configured to output an updated version of the input image with the damage instance highlighted by a visible region (e.g., the region 1042).

The processor(s) 106 of FIG. 1 can be configured to calculate a centroid of the enclosed damage area, as illustrated in FIG. 10D. The centroid can serve as the center of the plot point 122 of FIG. 1. The processor(s) 106 can also be configured to store data associated with the plot point 122 at the plot point database 150. In some configurations, the data associated with the plot point 122 can include the location of the centroid 1044 relative to the three-dimensional model 130 of the aircraft. In the same or alternative configurations, the data associated with the plot point 122 can include the location of the centroid 1044 relative to a larger digital image of the aircraft. For example, the processor(s) 106 can be configured to calculate a screen pixel coordinate location of the centroid 1044.

In some aspects, the processor(s) 106 of FIG. 1 can also be configured to prompt a user of the system 100 to identify a preliminary boundary of the damage instance. For example, as described in more detail below with reference to FIGS. 11A-11B, the processor(s) 106 can be configured to prompt the user of the system 100 to trace a preliminary boundary around an area indicating the damage instance.

FIG. 11A illustrates an example digital image 1102 showing a preliminary boundary 1110 of a damage region 1106 of an aircraft, in accordance with some implementations of the subject disclosure. In FIG. 11A, the digital image 1102 also shows a plot point 1108 associated with the damage region 1106. Generally, the plot point 1108 is similar to the plot point described in more detail above with reference to FIGS. 1 and 10A-10D. In the example of FIG. 11A, the preliminary boundary 1110 of the damage region 1106 has been annotated to the digital image 1102. This could be done by, for example, a user of the system 100 using a smartphone and tracing an outline of the damage 1106 with their finger, stylus, or other input device.

In some aspects, the preliminary boundary 1110 can encompass both visible and invisible damage to the aircraft. For example, visible damage can be damage to the aircraft that is visible to the eye of maintenance personnel inspecting the aircraft. Invisible damage can include damage to the underlying parts of the aircraft that are not visible, including damage identified through the use of various instruments, implied by the location of the visible damage, etc.

FIG. 11B illustrates an example digital image 1104 showing a set of boundary points 1112 along the preliminary boundary 1110 of the damage region 1106, in accordance with some implementations of the subject disclosure. In some aspects, the set of boundary points 1112 represents a digitization of the line associated with the preliminary boundary 1110 of the damage region 1106. In a particular aspect, data identifying the set of boundary points 1112 can be stored as the boundary 126 of FIG. 1.

In some aspects, the set of boundary points 1112 can be identified by a trained model (e.g., the second trained model 128 of FIG. 1). The trained model can be configured to generate a digitized boundary shape from the set of boundary points 1112. In some configurations, the digitized boundary shape can be used by the processors 106 of FIG. 1 to identify one or more maintenance conditions if the digitized boundary shape matches the preliminary boundary 1110 within a boundary match threshold. For example, if the digitized boundary shape matches the preliminary boundary 1110 for 95% of the length of the preliminary boundary 1110, the processors 106 can be configured to identify one or more maintenance conditions for each of the boundary points 1112 of the digitized boundary shape.

FIG. 11C illustrates an example digital image 1114 superimposing the digital image 1104 of FIG. 11B on portions of a layer of a three-dimensional model of the aircraft, in accordance with some implementations of the subject disclosure. In the example of FIG. 11C, the digital image 1104 is superimposed on a plurality of ADL zones as described in more detail above with reference to FIG. 5. In some configurations, the digital image 1114 can include portions of various other layers, including the first layer 132 of FIG. 1, the second layer 134, etc.

In the example of FIG. 11C, the digital image 1114 illustrates the digitized boundary shape including the set of boundary points 1112 superimposed over ADL zones 1116, 1118, 1120. As illustrated by FIG. 11C, the damage to the aircraft can cross multiple ADL zones, each of which can be associated with different allowable damage limits.

In some implementations, the processors 106 of FIG. 1 can be configured to identify one or more maintenance conditions 112 for each of the boundary points 1112. The processors 106 can also be configured to identify a subset of the boundary points 1112 associated with unique associated maintenance condition(s). For example, if all of the boundary points 1112 within the ADL zone 1116 returned identical maintenance conditions 112, the processors 106 can be configured to remove duplicate data associated with those boundary points 1112. Likewise, if all of the boundary points 1112 within the ADL zone 1118 return identical maintenance conditions 112, the processors 106 can be configured to remove duplicate data associated with those boundary points 1112, leaving only data associated with a single boundary point 1112 within the ADL zone 1116 and a single boundary point 1112 within the ADL zone 1118. The processors 106 of FIG. 1 can also be configured to obtain the damage limit 148 from the digital service manual 144 based on the subset of the boundary points 1112.

In some aspects, the digitized boundary shape can also encompass one or more islands. For the purposes of the subject disclosure, an island can include one or more portions of a layer of a three-dimensional model that are wholly enclosed by a boundary of a damage region. For example, the ADL zone 1120 is an island encompassed by the preliminary boundary 1110. In such aspects, the processor(s) 106 of FIG. 1 can be configured to generate one or more additional boundary points 1122 associated with boundaries of the island. The processor(s) 106 can also be configured to identify one or more maintenance conditions 112 associated with each of the boundary points 1122 in order to identify one or more additional damage limits 148 from the digital service manual 144.

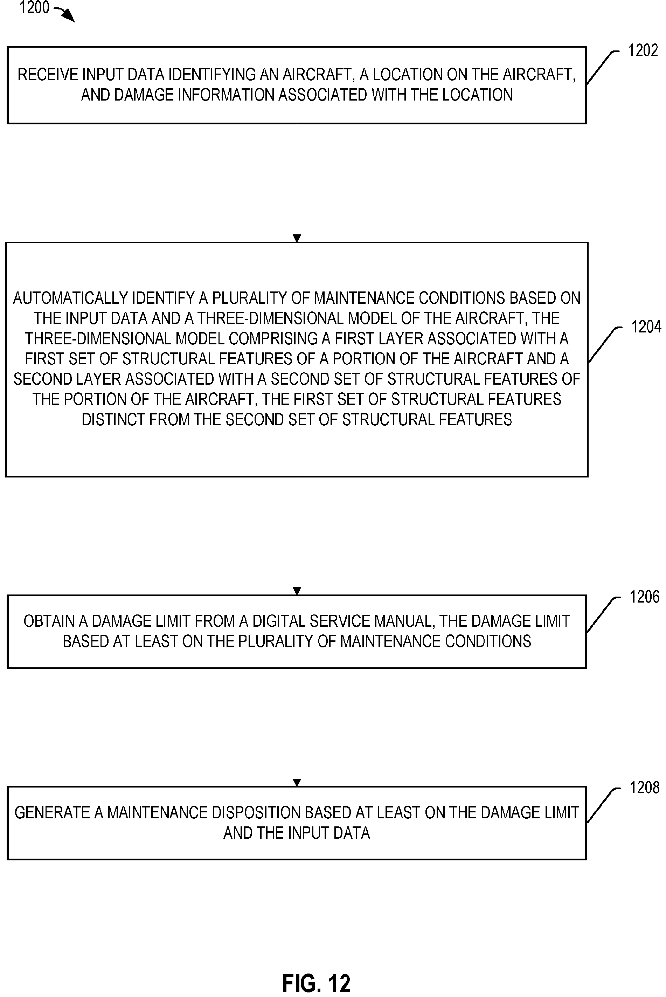

FIG. 12 is a flow chart of an example method 1200 for automated damage assessment, in accordance with some examples of the subject disclosure. The method 1200 can be initiated, performed, or controlled by one or more processors executing instructions, such as by the processor(s) 106 of FIG. 1 executing instructions from the memory 108.

In some implementations, the method 1200 includes, at 1202, receiving input data identifying an aircraft, a location on the aircraft, and damage information associated with the location. For example, the processor(s) 106 of FIG. 1 can receive, from the device(s) 104, the input data 152 that includes the aircraft data 138, the aircraft location data 140, and the damage information data 142.

In the example of FIG. 12, the method 1200 also includes, at 1204, automatically identifying a plurality of maintenance conditions based on the input data and a three-dimensional model of the aircraft. The three-dimensional model comprises a first layer associated with a first set of structural features of a portion of the aircraft and a second layer associated with a second set of structural features of the portion of the aircraft, where the first set of structural features are distinct from the second set of structural features. For example, the processor(s) 106 of FIG. 1 can automatically identify the maintenance conditions 112 based on the input data 152 and the three-dimensional model 130 of the aircraft, where the three-dimensional model 130 of the aircraft includes the first layer 132 and the second layer 134. The first layer 132 and the second layer 134 can include, for example, any two of the layers 400, 500, 600, 700, 800, 900 of FIGS. 4-9 illustrating various structural features as described in more detail above.

In the example of FIG. 12, the method 1200 also includes, at 1206, obtaining a damage limit from a digital service manual, where the damage limit is based at least on the plurality of maintenance conditions. For example, the processor(s) 106 of FIG. 1 can obtain the damage limit(s) 148 from the digital service manual 144, the damage limit(s) 148 based at least on the maintenance conditions 112.

In the example of FIG. 12, the method 1200 also includes, at 1208, generating a maintenance disposition based at least on the damage limit and the input data. For example, the processor(s) 106 of FIG. 1 can generate the maintenance disposition(s) 116 based at least on the damage limit(s) 148 and the input data 152.

In some implementations, the method 1200 can include more, fewer, and/or different steps without departing from the scope of the subject disclosure. For example, the method 1200 can also include identifying a plot point associated with a center point of the damage to the aircraft and/or storing the plot point in a plot point database where the plot point database includes a plurality of plot points associated with a history of damage to the aircraft, a history of damage to a plurality of aircraft, or a combination thereof. As an additional example, the method 1200 can include automatically identifying a boundary of a damage region for the aircraft. In such examples, the method 1200 can include generating a digitized boundary shape from the set of boundary points, where the digitized boundary shape matches the boundary within a boundary match threshold. As a further example, the method 1200 can also include identifying a subset of the boundary points associated with a unique set of associated maintenance conditions.

Further, the methods described above with reference to FIGS. 1-12 can be implemented to realize one or more of the technical advantages described in more detail above. For example, the method 1200 can enable flight crews, mechanics and engineers-who are required to inspect aircraft for structural damages after each flight to determine if there is new damage-to efficiently ensure the damage is within allowable damage limits by automatically identifying maintenance conditions based on input data and a three-dimensional model. The method 1200 can efficiently generate a damage disposition based on the input data and damage limits retrieved from the digital SRM without the need to review thousands of pages of SRM.

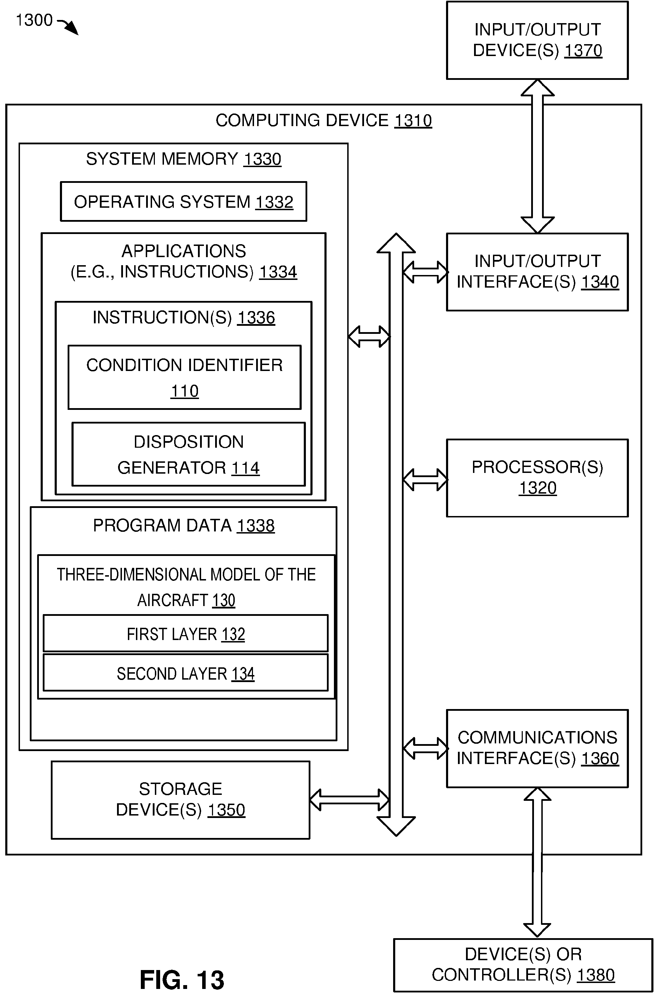

FIG. 13 is a block diagram of a computing environment 1300 including a computing device 1310 configured to support aspects of computer-implemented methods and computer-executable program instructions (or code), in accordance with some examples of the subject disclosure. For example, the computing device 1310, or portions thereof, is configured to execute instructions to initiate, perform, or control one or more operations described in more detail above with reference to FIGS. 1-12. In a particular aspect, the computing device 1310 can include, correspond to, or be included within the computing device 102, the device(s) 104, the digital service manual(s) 144 of FIG. 1, one or more servers, one or more virtual devices, or a combination thereof.

The computing device 1310 includes one or more processors 1320. In a particular aspect, the processor(s) 1320 correspond to the processor(s) 106 of FIG. 1. The processor(s) 1320 are configured to communicate with system memory 1330, one or more storage devices 1350, one or more input/output interfaces 1340, one or more communications interfaces 1360, or any combination thereof. The system memory 1330 includes volatile memory devices (e.g., random access memory (RAM) devices), nonvolatile memory devices (e.g., read-only memory (ROM) devices, programmable read-only memory, and flash memory), or both. The system memory 1330 stores an operating system 1332, which can include a basic input/output system for booting the computing device 1310 as well as a full operating system to enable the computing device 1310 to interact with users, other programs, and other devices. The system memory 1330 stores system (program) data 1338, such as the three-dimensional model 130 of the aircraft, the first layer 132, the second layer 134 of FIG. 1, or a combination thereof.

The system memory 1330 includes one or more applications 1334 (e.g., sets of instructions) executable by the processor(s) 1320. As an example, the one or more applications 1334 include the instructions 1336 executable by the processor(s) 1320 to initiate, control, or perform one or more operations described with reference to FIGS 1-12. To illustrate, the one or more applications 1334 include the instructions 1336 executable by the processor(s) 1320 to initiate, control, or perform one or more operations described with reference to receiving the input data 152 of FIG. 1, automatically identifying the plurality of maintenance conditions 112 based on the input data and the three-dimensional model 130, obtaining the damage limit 148 from the digital service manual 144, and generating the maintenance disposition 116 based at least on the damage limit and the input data.

In a particular implementation, the system memory 1330 includes a (optionally non-transitory) computer readable medium (e.g., a computer-readable storage device) storing the instructions 1336 that, when executed by the processor(s) 1320, cause the processor(s) 1320 to initiate, perform, or control operations for automated damage assessment. The operations include receiving input data identifying an aircraft, a location on the aircraft, and damage information associated with the location. The operations also include automatically identifying a plurality of maintenance conditions based on the input data and the three-dimensional model of the aircraft, where the three-dimensional model includes a first layer associated with a first set of structural features of a portion of the aircraft and a second layer associated with a second set of structural features of the portion of the aircraft, the first set of structural features distinct from the second set of structural features. The operations also include obtaining the damage limit from the digital service manual, where the damage limit is based at least on the plurality of maintenance conditions. The operations also include generating a maintenance disposition based at least on the damage limit and the input data.

The one or more storage devices 1350 include nonvolatile storage devices, such as magnetic disks, optical disks, or flash memory devices. In a particular example, the storage devices 1350 include both removable and non-removable memory devices. The storage devices 1350 are configured to store an operating system, images of operating systems, applications (e.g., one or more of the applications 1334), and program data (e.g., the program data 1338). In a particular aspect, the system memory 1330, the storage devices 1350, or both, include tangible computer-readable media. In a particular aspect, one or more of the storage devices 1350 are external to the computing device 1310.

The one or more input/output interfaces 1340 enable the computing device 1310 to communicate with one or more input/output devices 1370 to facilitate user interaction. For example, the one or more input/output interfaces 1340 can include a display interface, an input interface, or both. For example, the input/output interface 1340 is adapted to receive input from a user, to receive input from another computing device, or a combination thereof. In some implementations, the input/output interface 1340 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device(s) 1370 include one or more user interface devices and displays, including some combination of buttons, keyboards, pointing devices, displays, speakers, microphones, touch screens, and other devices.

The processor(s) 1320 are configured to communicate with devices or controllers 1380 via the one or more communications interfaces 1360. For example, the one or more communications interfaces 1360 can include a network interface. The devices or controllers 1380 can include, for example, the plot point database 150 of FIG. 1.

In some implementations, a (optionally non-transitory) computer readable medium (e.g., a computer-readable storage device) stores instructions that, when executed by one or more processors, cause the one or more processors to initiate, perform, or control operations to perform part of or all the functionality described above. For example, the instructions can be executable to implement one or more of the operations or methods of FIGS. 1-12. In some implementations, part or all of one or more of the operations or methods of FIGS. 1-12 can be implemented by one or more processors (e.g., one or more central processing units (CPUs), one or more graphics processing units (GPUs), one or more digital signal processors (DSPs)) executing instructions, by dedicated hardware circuitry, or any combination thereof.

The illustrations of the examples described herein are intended to provide a general understanding of the structure of the various implementations. The illustrations are not intended to serve as a complete description of all of the elements and features of apparatus and systems that utilize the structures or methods described herein. Many other implementations can be apparent to those of skill in the art upon reviewing the disclosure. Other implementations can be utilized and derived from the disclosure, such that structural and logical substitutions and changes can be made without departing from the scope of the disclosure. For example, method operations can be performed in a different order than shown in the figures or one or more method operations can be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results can be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features can be grouped together or described in a single implementation for the purpose of streamlining the disclosure. Examples described above illustrate but do not limit the disclosure. It should also be understood that numerous modifications and variations are possible in accordance with the principles of the subject disclosure. As the following claims reflect, the claimed subject matter can be directed to less than all of the features of any of the disclosed examples. Accordingly, the scope of the disclosure is defined by the following claims and their equivalents.

Further, the disclosure comprises the following examples:
According to Example 1, a method includes receiving input data identifying an aircraft, a location on the aircraft, and damage information associated with the location; automatically identifying a plurality of maintenance conditions based on the input data and a three-dimensional model of the aircraft, the three-dimensional model comprising a first layer associated with a first set of structural features of a portion of the aircraft and a second layer associated with a second set of structural features of the portion of the aircraft, the first set of structural features distinct from the second set of structural features; obtaining a damage limit from a digital service manual, the damage limit based at least on the plurality of maintenance conditions; and generating a maintenance disposition based at least on the damage limit and the input data.
Example 2 includes the method of Example 1, wherein content of the digital service manual is stored as a knowledge graph data structure.
Example 3 includes the method of Example 1 or Example 2, wherein the damage limit comprises an allowable damage limit.
Example 4 includes the method of any of Examples 1 to 3, wherein the damage limit comprises a repairable damage limit.
Example 5 includes the method of any of Examples 1 to 4, wherein the input data comprises data associated with a digital image of damage to the aircraft.
Example 6 includes the method of Example 5 and further includes identifying a plot point associated with a center point of the damage to the aircraft.
Example 7 includes the method of Example 6, wherein identifying the plot point comprises identifying the plot point by a first trained model.
Example 8 includes the method of Example 6 or Example 7 and further includes storing the plot point in a plot point database, the plot point database including a plurality of plot points associated with a history of damage to the aircraft, a history of damage to a plurality of aircraft, or a combination thereof.
Example 9 includes the method of any of Examples 1 to 8 and further includes automatically identifying a boundary of a damage region for the aircraft.
Example 10 includes the method of Example 9, wherein the boundary encompasses visible and invisible damage to the aircraft.
Example 11 includes the method of Example 9 or Example 10, wherein identifying the boundary comprises identifying, by a second trained model, a set of boundary points along the boundary.
Example 12 includes the method of Example 11 and further includes generating a digitized boundary shape from the set of boundary points, the digitized boundary shape matching the boundary within a boundary match threshold.
Example 13 includes the method of Example 11 or Example 12, wherein automatically identifying the plurality of maintenance conditions comprises automatically identifying the plurality of maintenance conditions for each of the boundary points.
Example 14 includes the method of Example 13 and further includes identifying a subset of the boundary points associated with a unique set of associated maintenance conditions.
Example 15 includes the method of Example 14, wherein obtaining the damage limit from the digital service manual comprises obtaining the damage limit based on the subset of the boundary points.
Example 16 includes the method of any of Examples 1 to 15, wherein the first layer and the second layer are selected from a group including a part number layer, an allowable damage limit zone layer, an allowable damage limit area layer, a repairable damage limit zone layer, a material thickness layer, and a fastener layer.
According to Example 17, a device includes one or more processors configured to receive input data identifying an aircraft, a location on the aircraft, and damage information associated with the location; automatically identify a plurality of maintenance conditions based on the input data and a three-dimensional model of the aircraft, the three-dimensional model comprising a first layer associated with a first set of structural features of a portion of the aircraft and a second layer associated with a second set of structural features of the portion of the aircraft, the first set of structural features distinct from the second set of structural features; obtain a damage limit from a digital service manual, the damage limit based at least on the plurality of maintenance conditions; and generate a maintenance disposition based at least on the damage limit and the input data.
Example 18 includes the device of Example 17, wherein content of the digital service manual is stored as a knowledge graph data structure.
Example 19 includes the device of Example 17 or Example 18, wherein the damage limit comprises an allowable damage limit.
Example 20 includes the device of any of Examples 17 to 19, wherein the damage limit comprises a repairable damage limit.
Example 21 includes the device of any of Examples 17 to 20, wherein the input data comprises data associated with a digital image of damage to the aircraft.
Example 22 includes the device of Example 21, wherein the one or more processors are further configured to identify a plot point associated with a center point of the damage to the aircraft.
Example 23 includes the device of Example 22, wherein the one or more processors are configured to identify the plot point using a first trained model.
Example 24 includes the device of Example 22 or Example 23, wherein the one or more processors are further configured to store the plot point in a plot point database, the plot point database including a plurality of plot points associated with a history of damage to the aircraft, a history of damage to a plurality of aircraft, or a combination thereof.
Example 25 includes the device of any of Examples 17 to 24, wherein the one or more processors are further configured to automatically identify a boundary of a damage region for the aircraft.
Example 26 includes the device of Example 25, wherein the boundary encompasses visible and invisible damage to the aircraft.
Example 27 includes the device of Example 25 or Example 26, wherein the one or more processors are configured to identify the boundary including identifying, by a second trained model, a set of boundary points along the boundary.
Example 28 includes the device of Example 27, wherein the one or more processors are further configured to generate a digitized boundary shape from the set of boundary points, the digitized boundary shape matching the boundary within a boundary match threshold.
Example 29 includes the device of Example 27 or Example 28, wherein the one or more processors are configured to identify the plurality of maintenance conditions including automatically identifying the plurality of maintenance conditions for each of the boundary points.
Example 30 includes the device of Example 29, wherein the one or more processors are further configured to identify a subset of the boundary points associated with a unique set of associated maintenance conditions.
Example 31 includes the device of Example 30, wherein the one or more processors are configured to obtain the damage limit from the digital service manual including obtaining the damage limit based on the subset of the boundary points.
Example 32 includes the device of any of Examples 17 to 31, wherein the first layer and the second layer are selected from a group including a part number layer, an allowable damage limit zone layer, an allowable damage limit area layer, a repairable damage limit zone layer, a material thickness layer, and a fastener layer.
According to Example 33, a (optionally non-transitory) computer-readable medium comprising instructions that, when executed by one or more processors, cause the one or more processors to receive input data identifying an aircraft, a location on the aircraft, and damage information associated with the location; automatically identify a plurality of maintenance conditions based on the input data and a three-dimensional model of the aircraft, the three-dimensional model comprising a first layer associated with a first set of structural features of a portion of the aircraft and a second layer associated with a second set of structural features of the portion of the aircraft, the first set of structural features distinct from the second set of structural features; obtain a damage limit from a digital service manual, the damage limit based at least on the plurality of maintenance conditions; and generate a maintenance disposition based at least on the damage limit and the input data.
Example 34 includes the (optionally non-transitory) computer-readable medium of Example 33, wherein content of the digital service manual is stored as a knowledge graph data structure.
Example 35 includes the (optionally non-transitory) computer-readable medium of Example 33 or Example 34, wherein the damage limit comprises an allowable damage limit.
Example 36 includes the (optionally non-transitory) computer-readable medium of any of Examples 33 to 35, wherein the damage limit comprises a repairable damage limit.
Example 37 includes the (optionally non-transitory) computer-readable medium of any of Examples 33 to 36 , wherein the input data comprises data associated with a digital image of damage to the aircraft.
Example 38 includes the (optionally non-transitory) computer-readable medium of Example 37, wherein the instructions, when executed by the one or more processors, further cause the one or more processors to identify a plot point associated with a center point of the damage to the aircraft.
Example 39 includes the (optionally non-transitory) computer-readable medium of Example 38, wherein the one or more processors identify the plot point including identifying the plot point by a first trained model.
Example 40 includes the (optionally non-transitory) computer-readable medium of Example 38 or Example 39, wherein the instructions, when executed by the one or more processors, further cause the one or more processors to store the plot point in a plot point database, the plot point database including a plurality of plot points associated with a history of damage to the aircraft, a history of damage to a plurality of aircraft, or a combination thereof.
Example 41 includes the (optionally non-transitory) computer-readable medium of any of Examples 33 to 40, wherein the instructions, when executed by the one or more processors, further cause the one or more processors to automatically identify a boundary of a damage region for the aircraft.
Example 42 includes the (optionally non-transitory) computer-readable medium of Example 41, wherein the boundary encompasses visible and invisible damage to the aircraft.
Example 43 includes the (optionally non-transitory) computer-readable medium of Example 41 or Example 42, wherein the one or more processors identify the boundary by identifying, by a second trained model, a set of boundary points along the boundary.
Example 44 includes the (optionally non-transitory) computer-readable medium of Example 43, wherein the instructions, when executed by the one or more processors, further cause the one or more processors to generate a digitized boundary shape from the set of boundary points, the digitized boundary shape matching the boundary within a boundary match threshold.
Example 45 includes the (optionally non-transitory) computer-readable medium of Example 43 or Example 44, wherein the one or more processors the plurality of maintenance conditions including automatically identifying the plurality of maintenance conditions for each of the boundary points.
Example 46 includes the (optionally non-transitory) computer-readable medium of Example 45, wherein the instructions, when executed by the one or more processors, further cause the one or more processors to identify a subset of the boundary points associated with a unique set of associated maintenance conditions.
Example 47 includes the (optionally non-transitory) computer-readable medium of Example 46, wherein the one or more processors obtain the damage limit from the digital service manual including obtaining the damage limit based on the subset of the boundary points.
Example 48 includes the (optionally non-transitory) computer-readable medium of any of Examples 33 to 47, wherein the first layer and the second layer are selected from a group including a part number layer, an allowable damage limit zone layer, an allowable damage limit area layer, a repairable damage limit zone layer, a material thickness layer, and a fastener layer.
According to Example 48A, a (optionally non-transitory) computer-readable medium comprising instructions that, when executed by one or more processors, cause the one or more processors to perform the method of any of Examples 1 to 16.
According to Example 49, a device includes means for receiving input data identifying an aircraft, a location on the aircraft, and damage information associated with the location; means for automatically identifying a plurality of maintenance conditions based on the input data and a three-dimensional model of the aircraft, the three-dimensional model comprising a first layer associated with a first set of structural features of a portion of the aircraft and a second layer associated with a second set of structural features of the portion of the aircraft, the first set of structural features distinct from the second set of structural features; means for obtaining a damage limit from a digital service manual, the damage limit based at least on the plurality of maintenance conditions; and means for generating a maintenance disposition based at least on the damage limit and the input data.
Example 50 includes the device of Example 49, wherein content of the digital service manual is stored as a knowledge graph data structure.
Example 51 includes the device of Example 49 or Example 50, wherein the damage limit comprises an allowable damage limit.
Example 52 includes the device of any of Examples 49 to 51, wherein the damage limit comprises a repairable damage limit.
Example 53 includes the device of any of Examples 49 to 52, wherein the input data comprises data associated with a digital image of damage to the aircraft.
Example 54 includes the device of Example 53 and further includes means for identifying a plot point associated with a center point of the damage to the aircraft.
Example 55 includes the device of Example 54, wherein identifying the plot point comprises identifying the plot point by a first trained model.
Example 56 includes the device of Example 54 or Example 55 and further includes means for storing the plot point in a plot point database, the plot point database including a plurality of plot points associated with a history of damage to the aircraft, a history of damage to a plurality of aircraft, or a combination thereof.
Example 57 includes the device of any of Examples 49 to 56 and further includes means for automatically identifying a boundary of a damage region for the aircraft.
Example 58 includes the device of Example 57, wherein the boundary encompasses visible and invisible damage to the aircraft.
Example 59 includes the device of Example 58, wherein identifying the boundary comprises identifying, by a second trained model, a set of boundary points along the boundary.
Example 60 includes the device of Example 59 and further includes means for generating a digitized boundary shape from the set of boundary points, the digitized boundary shape matching the boundary within a boundary match threshold.
Example 61 includes the device of Example 59 or Example 60, wherein automatically identifying the plurality of maintenance conditions comprises automatically identifying the plurality of maintenance conditions for each of the boundary points.
Example 62 includes the device of Example 61 and further includes means for identifying a subset of the boundary points associated with a unique set of associated maintenance conditions.
Example 63 includes the device of Example 62, wherein obtaining the damage limit from the digital service manual comprises obtaining the damage limit based on the subset of the boundary points.
Example 64 includes the device of any of Examples 49 to 63, wherein the first layer and the second layer are selected from a group including a part number layer, an allowable damage limit zone layer, an allowable damage limit area layer, a repairable damage limit zone layer, a material thickness layer, and a fastener layer.

## Claims

1. A device (102) comprising:
one or more processors (106) configured to:
receive input data (152) identifying an aircraft (138), a location on the aircraft (140), and damage information associated with the location (142);
automatically identify a plurality of maintenance conditions (112) based on the input data and a three-dimensional model (130) of the aircraft, the three-dimensional model comprising a first layer (132) associated with a first set of structural features of a portion of the aircraft and a second layer (134) associated with a second set of structural features of the portion of the aircraft, the first set of structural features distinct from the second set of structural features;
obtain a damage limit (148) from a digital service manual (144), the damage limit based at least on the plurality of maintenance conditions; and
generate a maintenance disposition (116) based at least on the damage limit and the input data.

2. The device of claim 1, wherein content of the digital service manual is stored as a knowledge graph data structure.

3. The device of claim 1 or claim 2, wherein the damage limit comprises an allowable damage limit.

4. The device of any of claims 1 to 3, wherein the damage limit comprises a repairable damage limit.

5. The device of any of claims 1 to 4, wherein the input data comprises data associated with a digital image of damage to the aircraft.

6. The device of claim 5, wherein the one or more processors are further configured to identify a plot point associated with a center point of the damage to the aircraft, optionally, wherein the one or more processors are configured to identify the plot point including identifying the plot point by a first trained model., and/or, wherein the one or more processors are further configured to store the plot point in a plot point database, the plot point database including a plurality of plot points associated with a history of damage to the aircraft, a history of damage to a plurality of aircraft, or a combination thereof.

7. The device of any of claims 1 to 6, wherein the one or more processors are further configured to automatically identify a boundary of a damage region for the aircraft.

8. The device of claim 7, wherein the boundary encompasses visible and invisible damage to the aircraft.

9. The device of claim 7 or claim 8, wherein the one or more processors are configured to identify the boundary including identifying, by a second trained model, a set of boundary points along the boundary.

10. The device of claim 9, wherein the one or more processors are further configured to generate a digitized boundary shape from the set of boundary points, the digitized boundary shape matching the boundary within a boundary match threshold.

11. The device of claim 9 or claim 10, wherein the one or more processors are configured to identify the plurality of maintenance conditions including automatically identifying the plurality of maintenance conditions for each of the boundary points.

12. The device of claim 11, wherein the one or more processors are further configured to identify a subset of the boundary points associated with a unique set of associated maintenance conditions, optionally, wherein the one or more processors are configured to obtain the damage limit from the digital service manual including obtaining the damage limit based on the subset of the boundary points.

13. A method comprising:
receiving input data (152) identifying an aircraft (138), a location on the aircraft (140), and damage information associated with the location (142);
automatically identifying a plurality of maintenance conditions (112) based on the input data and a three-dimensional model (130) of the aircraft, the three-dimensional model comprising a first layer (132) associated with a first set of structural features of a portion of the aircraft and a second layer (134) associated with a second set of structural features of the portion of the aircraft, the first set of structural features distinct from the second set of structural features;
obtaining a damage limit (148) from a digital service manual (144), the damage limit based at least on the plurality of maintenance conditions; and
generating a maintenance disposition (116) based at least on the damage limit and the input data.

14. The method of claim 13, further comprising:
automatically identifying a boundary of a damage region for the aircraft, wherein identifying the boundary comprises identifying, by a second trained model, a set of boundary points along the boundary, wherein automatically identifying the plurality of maintenance conditions comprises automatically identifying the plurality of maintenance conditions for each of the boundary points;
generating a digitized boundary shape from the set of boundary points, the digitized boundary shape matching the boundary within a boundary match threshold; and
identifying a subset of the boundary points associated with a unique set of associated maintenance conditions, wherein obtaining the damage limit from the digital service manual comprises obtaining the damage limit based on the subset of the boundary points.

15. A computer-readable medium (1330) comprising instructions (1336) that, when executed by one or more processors (1320, 106), cause the one or more processors to perform the method of claim 13 or claim 14.
